Europäisches Patentamt

**European Patent Office**

**Office européen des brevets**

(11) Veröffentlichungsnummer : **0 052 859**
**B1**

(12) **EUROPÄISCHE PATENTSCHRIFT**

(45) Veröffentlichungstag der Patentschrift :
16.04.86

(51) Int. Cl.⁴ : **F 01 P 7/08, F 16 D 43/25**

(21) Anmeldenummer : **81109753.4**

(22) Anmeldetag : **19.11.81**

(54) **Selbsttätig schaltbarer Ventilator für Kühlsysteme von Verbrennungsmotoren.**

(30) Priorität : **21.11.80 DE 3043929**

(43) Veröffentlichungstag der Anmeldung :
**02.06.82 Patentblatt 82/22**

(45) Bekanntmachung des Hinweises auf die Patenterteilung : **16.04.86 Patentblatt 86/16**

(84) Benannte Vertragsstaaten :
**AT DE FR GB IT NL SE**

(56) Entgegenhaltungen :
**FR-A- 1 261 720**
**FR-A- 2 328 866**
**GB-A- 958 138**
**US-A- 2 273 306**
**US-A- 2 487 946**
**US-A- 3 180 325**
**US-A- 3 797 316**

(73) Patentinhaber : **Auve Patentverwertungs GmbH**
**Friedrich Herschel Strasse 8**
**D-8000 München 80 (DE)**

(72) Erfinder : **Ryba, Anton**
**Freiheitsstrasse 57**
**I-39100 Bozen (IT)**

(74) Vertreter : **Seidel, Herta, Dipl.-Phys.**
**D-8267 Lohkirchen Lkrs. Mühldorf/Inn (DE)**

Jouve, 18, rue St-Denis, 75001 Paris, France

## Beschreibung

Die Erfindung betrifft einen selbsttätig schaltbaren Ventilator für Kühlsysteme von Verbrennungsmotoren mit einem vor der Kühlluft überstrichenen ringförmigen Thermostaten, der als gasdichter Behälter in Form eines Balges ausgebildet ist und eine starre, dem Kühlluftstrom zugewandte Frontplatte und eine axial nachgiebige Wandung aufweist und ein Medium enthält, das bei einer vorgegebenen Temperaturerhöhung auf die nachgiebige Wandung im Sinne einer Ankupplung des Ventilators an eine Antriebswelle des Verbrennungsmotors einwirkt, wobei die Frontplatte und die axial nachgiebige Wandung aus Metall bestehen und die Frontplatte mit einem Nabenteil des Ventilators verbunden ist.

Aus einer aus der FR-A 2 328 866 bekannten Ausführungsform eines Ventilators ist der Thermostat als gasdichter Behälter mit einer starren, dem Kühlluftstrom zugewandten Frontplatte und einer axial nachgiebigen Wandung in Form eines Balges ausgebildet. Dabei ist die nachgiebige Wandung mit der Frontplatte gasdicht verbunden. Im Innenraum des Balges befindet sich als Kühlmedium eine Flüssigkeit, die bei höherer Temperatur zu sieden beginnt. Der sich beim Siedevorgang erhöhende Druck im Thermostatbehälter wirkt auf eine Kupplungsplatte, die zwischen der nachgiebigen Wandung des Thermostatbehälters und der Kupplungsscheibe der Antriebswelle frei verschiebbar auf der Nabe sitzt und drückt die Kupplungsplatte gegen die Kupplungsscheibe der Antriebswelle. Dabei wird das Drehmoment der Antriebswelle allein mit Hilfe mehrerer an der Kupplungsplatte sitzender Vorsprünge, die in Nuten am Ventilatorteil eingreifen auf den Ventilator übertragen, so daß dieser zusammen mit dem fest mit ihm verbundenen Thermostat in Drehung versetzt wird.

Es hat sich aber gezeigt, daß bei Verwendung von gummielastischen Materialien für den Balg auf die Dauer keine zufriedenstellende Gasdichtigkeit gegenüber den als Kühlmedien in Frage kommenden Flüssigkeiten erhalten wird. Man mußte sich daher entschließen, von der Verwendung gummielastischer Bälge Abstand zu nehmen und ganz auf Bälge aus Metall überzugehen.

Bei der aus der genannten FR-A-2 328 866 bekannten Konstruktion des Thermostaten ist das Problem der Wärmeübertragung vom Außenraum auf das Füllmedium noch nicht optimal gelöst, da die Befestigungen der genannten Konstruktionselemente des Thermostaten eine beachtliche Wärmeableitung und damit einen großen Wärmeverlust bedingen.

Auch bei der in der US-A-3 180 325 beschriebenen Ausbildung einer Schaltvorrichtung für einen Ventilator von Verbrennungsmotoren ist bereits ein Faltenbalg mit mehreren Wellen verwendet. Die bewegliche mit dem Faltenbalg einstückige Frontplatte überträgt die Kraft jedoch ebenfalls nur auf eine gesondert geführte Druckplatte, die ihrerseits erst die Ankupplung an die Antriebswelle des Verbrennungsmotores bewirkt. Es hat sich jedoch gezeigt, daß bei einer solchen Konstruktion Fertigungsungenauigkeiten dazu führen können, daß unkontrollierbare Kräfte und Schwingungen aller Frequenzen und Richtungen, zusammen mit den Motorvibrationen im Resonanzbereich, so stark auf die Kupplungsplatte der Antriebswelle einwirken, daß bereits ohne Druckerhöhung im Thermostatbehälter, also ohne Bewegung der nachgiebigen Wandung des Behälters, die Kupplungsplatte mit der Kupplung der Antriebswelle in Kontakt kommt, d. h. daß die Kupplung willkürlich ein- und ausschaltet und damit eine Steuerung durch die Kühllufttemperatur untergräbt.

Bei der in der US-A-3 797 316 beschriebenen Vorrichtung handelt es sich um ein Temperaturmeßinstrument, welches sich zur Bestimmung der Temperatur einer in einem Faltenbalg eingeschlossenen Flüssigkeit bedient, die sich entsprechend der Temperatur des die Balgwand umströmenden Mediums mehr oder weniger ausdehnt und einen Meßfühler betätigt. Zur Verbesserung der Wärmeübertragung ist die Wandfläche des die Flüssigkeit umgebenden Behälters durch ein in den Balg hineinragendes Element vergrößert.. Das bekannte Temperaturmeßgerät ist aber nicht geeignet als Schaltelement für einen Ventilator eines Antriebsmotors eingesetzt zu werden, da ihm hierfür die erforderlichen Kupplungselemente fehlen und auch kein Hinweis gegeben ist wie und wo solche Elemente angeordnet werden könnten.

Auch der in der US-A-2 487 946 beschriebene Thermostat, welcher in erster Linie als Schaltelement in Stromkreisen dient, ist aufgrund seiner Konstruktion nicht für den Einsatz als Kupplungselement in einem Kühlsystem für Verbrennungsmotore geeignet, wenngleich auch hier der Schaltvorgang durch eine sich bei Temperaturänderung in ihrem Volumen verändernde in einem Behälter eingeschlossene Flüssigkeit bewirkt wird. Zur Verbesserung der Wärmeübertragung auf die für den Schaltvorgang dienende Flüssigkeit ist bei dem hier beschriebenen Schaltelement in der Mitte der Wandung bereits ein aus Kupfer bestehender Leiter eingeschweißt, der die Temperatur in verstärktem Maße auf eine zusätzlich noch vorhandene von Bimetallstreifen umschlossene Druckkammer überträgt, deren temperaturabhängige Gestaltänderung die eigentliche Schaltflüssigkeit betätigt. Bei dem bekannten Schaltelement wird eine Konstruktion verwendet, die im übrigen nicht unter die Gattung des hier in Frage stehenden Anmeldungsgegenstandes fällt.

Die in der GB-A-958 138 beschriebene, durch Wärme gesteuerte Kupplung umfaßt einen Behälter, der mit einem Medium gefüllt ist, welches bei einer Temperaturerhöhung in Folge seiner Ausdehnung den Kupplungsvorgang in die Wege leitet. Das hier zur Anwendung gelangende Medium ist aber ein fester Körper, nämlich Wachs, welches sich bei Temperaturerhöhung verflüssigt. Die Problematik einen gasdichten Behälter zu schaffen, welcher für eine Ankupplung an die Antriebswelle des Verbrennungsmotors geeignet ist liegt hier nicht vor, so daß die hier beschriebene Klemmverbindung mit der die elastische Wand und die Frontplatte miteinander und mit dem Nabenteil des Ventilators verbunden sind, nicht die Bedingungen, wie sie für einen gasdichten Behälter gefordert werden zu erfüllen brauchen.

Der Erfindung liegt daher als Aufgabe zugrunde, einen Thermostaten zu schaffen, der bei wirtschaftlicher Herstellung sowohl das Problem der Gasdichtheit als auch das Problem der Wärmeübertragung in optimaler Weise löst.

Dies wird erfindungsgemäß dadurch erreicht, daß die gasdichte Verbindung zwischen Frontplatte und axial nachgiebiger Wandung für die unmittelbare Übertragung eines Drehmomentes drehfest ausgebildet ist, daß die axial nachgiebige Wandung bei Entstehung eines entsprechenden Innendruckes des Füllmediums im Thermostaten unmittelbar über eine Reibfläche auf ein Kupplungsteil der Antriebswelle des Antriebsmotors einwirkt und durch Reibungsschluß das Drehmoment der Antriebswelle an den Ventilator überträgt, und daß mindestens ein wärmeleitendes Element vorgesehen ist, das mit der Frontplatte wärmeleitend verbunden ist, in den Hohlraum des Behälters hineinreicht und einen wählbaren Mindestabstand zwischen der Frontplatte und der nachgiebigen Wandung des Behälters bestimmt.

Die mit der festen Frontplatte wärmeleitend verbundenen, ein oder mehreren wärmeleitenden Elemente dienen zur Verbesserung der wärmeleitenden Verbindung zwischen der dem Kühlluftstrom zugewandten Frontplatte des Thermostaten und dem im Balg befindlichen Füllmedium. Da sie in den durch den Balg gebildeten Hohlraum hineinragen, beschleunigen sie den Wärmeaustausch mit dem Füllmedium.

Gleichzeitig bestimmen diese Elemente einen wählbaren Mindestabstand zwischen der Frontplatte und der nachgiebigen Wandung des Behälters.

Es hat sich gezeigt, daß ein Balg der oder dessen Teile aus Metall bestehen, für die Schaffung eines Hohlraumes mit ausgezeichneter Gasdichtheit besonders gut geeignet ist. Seine Randbereiche lassen sich mit der festen, dem Kühlluftstrom zugewandten Frontplatte sowohl gasdicht, als auch mit hervorragender Wärmeleitfähigkeit verbinden. Ferner kann die Übertragung des Drehmomentes der Antriebswelle auf den Ventilator durch die nachgiebige Wandung selbst, also unter Verzicht auf eine gesonderte Kupplungsplatte zwischen der Kupplungsscheibe der Antriebswelle und der nachgiebigen Wandung des Behälters erfolgen. Erst hierdurch ist es möglich geworden, eine technisch einwandfreie betriebssichere, vom Kühlluftstrom steuerbare Thermostatkupplung zu schaffen. Die Verbindung zwischen dem Hohlraum und der festen dem Kühlluftstrom zugewandten Frontplatte kann beispielsweise durch Verlöten oder Verschweißen der Randbereiche erfolgen. Aber auch Klemmverbindungen des Randbereiches des Balges mit der Innennabe des Ventilators haben sich als gasdicht erwiesen. Solche Klemmverbindungen können durch Verwendung von Halterungen aus isolierendem Material gegen Wärmeverluste noch zusätzlich geschützt sein.

Vorzugsweise ist der Balg aus einer oder mehreren Schalen gebildet, von denen mindestens eine eine gasdichte Struktur aufweist. Die Schale(n) können mit weiteren, schichtartig dazu angeordneten Schalen kombiniert sein, die ihrerseits mit Schlitzen oder Durchbrüchen versehen sind. Insbesondere ist es von Vorteil, mindestens eine der Schalen mit Schlitzen oder Durchbrüchen als Stützschale für die gasdichte Schale auszubilden und längs deren Oberfläche im Innenraum des Balges anzuordnen. Mindestens eine der Schalen mit Schlitzen oder Durchbrüchen kann ferner als Schutzschale für die gasdichte Schale ausgebildet sein, um diese längs deren Außenflächen gegen im Innenraum des Balg herrschende Überdrucke zu schützen. Man kann den Balg vorzugsweise als Faltenbalg mit einer oder mehreren Wellen ausbilden.

Bei einer wegen ihrer wirtschaftlichen Herstellung besonders interessanten und bevorzugten Ausbildung des Behälters für das Füllmedium, sind zwei gasdichte Schalen ringförmig ausgebildet und längs ihrer Ränder zu einem gasdichten Hohlraum vereinigt, der mit der Frontplatte wärmeleitend verbunden ist. Eine ringförmige Schale kann auch längs ihres Randes unmittelbar mit der Frontplatte wärmeleitend verbunden sein. Sind die den Balg bildenden gasdichten Schalen im Balginnenraum mit entsprechend geformten Schalen aus der mit Schlitzen oder Durchbrüchen versehenen biegesteifen Stützschalen und ggf. auch auf der Außenfläche des Balgs mit entsprechend geformten Schalen aus der mit Schlitzen oder Durchbrüchen versehenen elastischen Schutzschale kombiniert, so bilden sie gemeinsam einen mehrschichtigen Balg.

Einzelheiten der Erfindung sind in der nachstehenden Zeichnung dargestellt. Hierin zeigen :

Figur 1 einen Axialschnitt eines erfindungsgemäßen Ventilators, der auf der Wasserpumpenwelle eines Fahrzeugmotors montiert ist,

Figuren 2 und 3 Einzelteile des Faltenbalges im Schnitt,

Figuren 4 und 5 eine Draufsicht und einen Schnitt durch einen Federring,

Figur 6 einen Axialschnitt einer weiteren Ausbildung des erfindungsgemäßen Ventilators,

Figur 7 einen Axialschnitt einer weiteren Ausbildung des erfindungsgemäßen Ventilators,

Figuren 8, 9, 10 Teile des Balgs, wie er in dem in Fig. 7 gezeigten Ventilator verwendet ist,

Figur 11 eine Draufsicht auf den in Fig. 10 gezeigten Balgteil,

Figur 12 Draufsicht auf den in Fig. 9 gezeigten Balgteil und

Figur 13 einen Querschnitt durch eine Ausbildung einer Schale, wie sie für den Balg gemäß der in Fig. 7 gezeigten Ausbildung des Ventilators verwendbar ist.

Ein Gehäuse 1 einer Wasserpumpe ist in bekannter Weise mit einem Motor verbunden. Die Wasserpumpenwelle 2 ist mittels Kugellager 3 im Gehäuse 1 gelagert. Auf der Wasserpumpenwelle 2 ist ein Pumpenlaufrad 4 aufgepreßt. Eine Wellendichtung 5 trennt den Wasserraum vom Lagerteil. Auf die Wasserpumpenwelle 2 ist ferner eine Nabe 6 aufgepreßt, auf welcher eine aus Teilen 7 und 8 bestehende Keilriemenscheibe und eine zur Kupplung gehörige Gegenscheibe 9 mittels Nieten 10 befestigt sind. Auf einem angesetzten Teil 11 der Pumpenwelle 2 ist ein Ventilator frei drehbar gelagert. Diese Lagerung kann in verschiedener Weise ausgeführt sein, beispielsweise ist ein Gleitlager oder auch ein Nadellager möglich. Der Ventilator besteht aus dem inneren Nabenteil 18, welcher hier über die Kugellager 12 und 13 auf dem Teil 11 der Pumpenwelle 2 gelagert ist und einem ringförmigen äußeren Nabenteil 19, welcher Flügel 20 und 21 trägt. Die Anzahl und Ausführung der Flügel ist in der Praxis allgemein bekannt. Der Nabenteil 19 mit den Flügeln ist vorzugsweise aus Kunststoff gefertigt. Die beiden Kugellager 12 und 13 sind im vorliegenden Beispiel zur besseren Wärmeisolation gegenüber dem Teil 11 der Pumpenwelle 2 gewählt. Ein Sprengring 14, ein Distanzring 15 und ein Ringflansch 16 des inneren Nabenteiles 18 des Ventilators bilden eine Klemmverbindung um den Ventilator gegen eine axiale Verschiebung zu sichern.

Die Nabenteile 18 und 19 des Ventilators sind mit einem Thermostaten verbunden. Der Thermostat besteht aus einer stirnseitig fest angeordneten und dem Kühlluftstrom ausgesetzten metallischen Frontplatte 22, einem Faltenbalg 23 aus Metall und einer Grundplatte 24. Durch den Faltenbalg 23 wird zwischen der Frontplatte 22 und der Grundplatte 24 ein Hohlraum geschaffen, in den das Füllmedium eingefüllt werden kann.

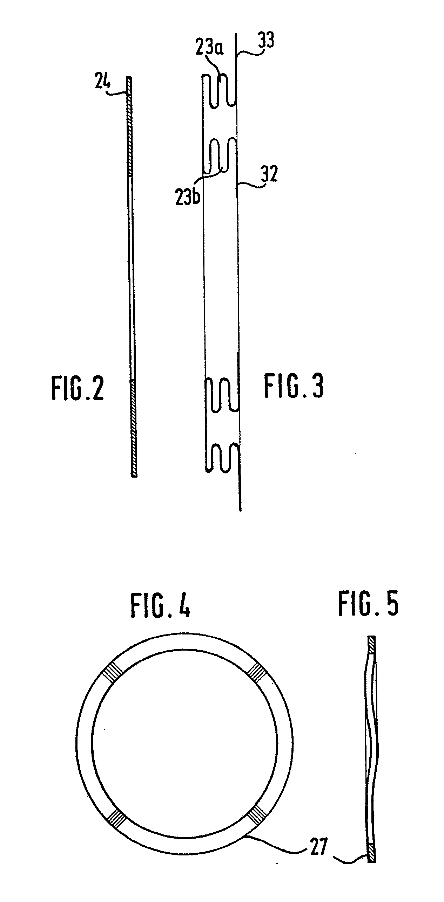

Der Faltenbalg 23 ist, wie aus Fig. 3 ersichtlich, mit einem inneren und einem äußeren Balgteil 23 a, b ausgebildet. Diese beiden Teile 23 a, b sind mittels der ebenfalls metallischen Grundplatte 24 durch Verschweißen oder Verlöten gasdicht verbunden.

Grundsätzlich ist es auch möglich den beschriebenen metallischen Faltenbalg mit der Grundplatte als Boden in einem Stück herzustellen. Ob dies im Einzelfall vorzuziehen ist, ist aus Gründen der Wirtschaftlichkeit von Fall zu Fall durch einen Fachmann zu entscheiden.

Die metallische Frontplatte 22 ist mit den Balgenden 32 und 33 (Fig. 3) gasdicht, vorzugsweise durch Löten oder Schweißen verbunden.

Bei dem inneren Balgende 32 genügt es allerdings auch schon, wenn man es, wie dargestellt, zusammen mit der Frontplatte 22 nur mit Hilfe einer Klemmverbindung mit dem inneren Nabenteil 18 drehfest und gasdicht verbindet.

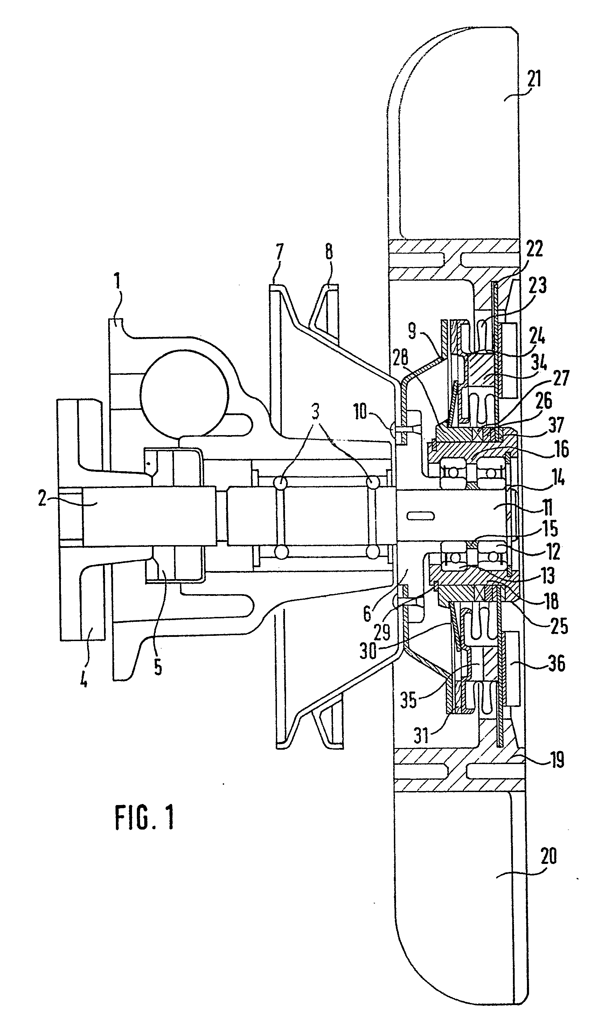

Eine solche Klemmverbindung besteht gemäß Fig. 1 aus einem Ring 26, einem Federring 27 (siehe auch Fig. 4 und 5) und einem Ring 28. Die Frontplatte 22 und der innere Balgrand 32 sind zusammen mit den genannten drei Ringen 26, 27 und 28 zwischen einen Fortsatz 25 des inneren Nabenteiles 18 und einen Sprengring 29 eingeklemmt. Zur Verbesserung der Wärmeisolation ist der Thermostat 22, 23, 24 in der Klemmvorrichtung 25, 26, 27, 28, 29 in einem Ringpaar 37 aus isolierendem Material gehalten. Die beschriebene Klemmvorrichtung kann auch durch eine geeignete Verschraubung ersetzt werden.

Es hat sich gezeigt, daß die beschriebene Verbindung zwischen Balg 23 und Frontplatte 22 eine gute Wärmeleitfähigkeit liefert. Eine weitere Verbesserung des Wärmeaustausches mit einem durch einen Einfüllstutzen in den Faltenbalg 23 eingefüllten Füllmedium wird durch einen Ring 34 geschaffen. Dieser Ring 34 ist mit der Frontplatte 22 gut wärmeleitend verlötet oder verschweißt und ragt in das Innere des Faltenbalges 23.

Neben seiner Aufgabe, die Wärme von der Frontplatte 22 gut und schnell in das Innere des Faltenbalges 23 zu leiten, hat der Ring 34 weiter die Aufgabe, ein unzulässiges Zusammendrücken des Faltenbalges zu verhindern. Seine Ausdehnung in Axialrichtung ist daher entsprechend dem zulässigen Mindestabstand zwischen Frontplatte 22 und Grundplatte 24 gewählt. Damit das Füllmedium vor und hinter den Räumen des Ringes 34 kommunizieren kann, weist der Ring längs seines Umfanges verteilt angeordnete Einschnitte 35 auf.

Anstelle des Ringes 34 können auch einzelne Segmente ringförmig auf der Frontplatte 22 angeordnet sein. Auch andere Formen, wie radial verlaufende Rippen (nicht dargestellt) sind denkbar.

Auf ihrer dem Kühlluftstrom ausgesetzten Oberfläche trägt die Frontplatte 22 Kühlrippen 36, die ebenfalls mit der Frontplatte 22 gut wärmeleitend verbunden sind. Die Frontplatte 22 kann hierzu, beispielsweise zusammen mit dem Ring 34 und den Kühlrippen 36, in einem Preß- oder Gießverfahren hergestellt sein.

An den beschriebenen Thermostaten 22, 23, 24 ist der die Flügel 20, 21 tragende Nabenteil 19 angespritzt. Auf der Grundplatte 24 ist ein Reibbelag 31 aus einem für Reibungskupplungen geeigneten Material befestigt.

Zwischen einem radial nach außen ragenden Ringflansch des Ringes 28 und der Grundplatte 24 befindet sich eine Tellerfeder 30. Mit dieser kann der auf das Füllmedium des Thermostaten wirkende Druck beeinflußt und auch die Eigenfederung des Faltenbalges berücksichtigt werden.

Im Hohlraum des beschriebenen Thermostaten befindet sich, wie in der DE-PS 26 35 896 bereits beschrieben, eine Flüssigkeit, deren Siedepunkt im Bereich 50°-60 °C liegt. Wenn der Siedepunkt tiefer liegt, kann dies mittels der Tellerfeder 30 ausgeglichen werden. Die Füllmenge der Flüssigkeit im Thermostaten wird so gewählt, daß über den ganzen Arbeitsbereich, also auch bei höchsten Betriebstemperaturen, immer eine bestimmte Menge Flüssigkeit unverdampft im Thermostaten verbleibt und somit vom Ventilator in Drehung mitgenommen wird. Diese verbleibende Flüssigkeitsmenge soll so bemessen sein, daß der durch ihre Fliehkraft erzeugte und auf den Kupplungsteil axial wirkende Anteil der Anpreßkraft allein nicht ausreicht, um das Kupplungs- und Drehmoment ohne temperaturbedingten Gasdruckanteil zu übertragen.

Als Füllmedium kann beispielsweise Trichlortrifluoräthan ($C_2Cl_3F_3$), welches unter der Handelsbezeichnung « Frigen 113 » bekannt ist, verwendet werden. Das Füllmedium kann auch aus zwei oder mehr verschiedenen Flüssigkeiten bestehen, wobei aber der Siedepunkt keiner der Stoffe wesentlich unter der gewünschten Einschalttemperatur des Thermostaten liegen soll.

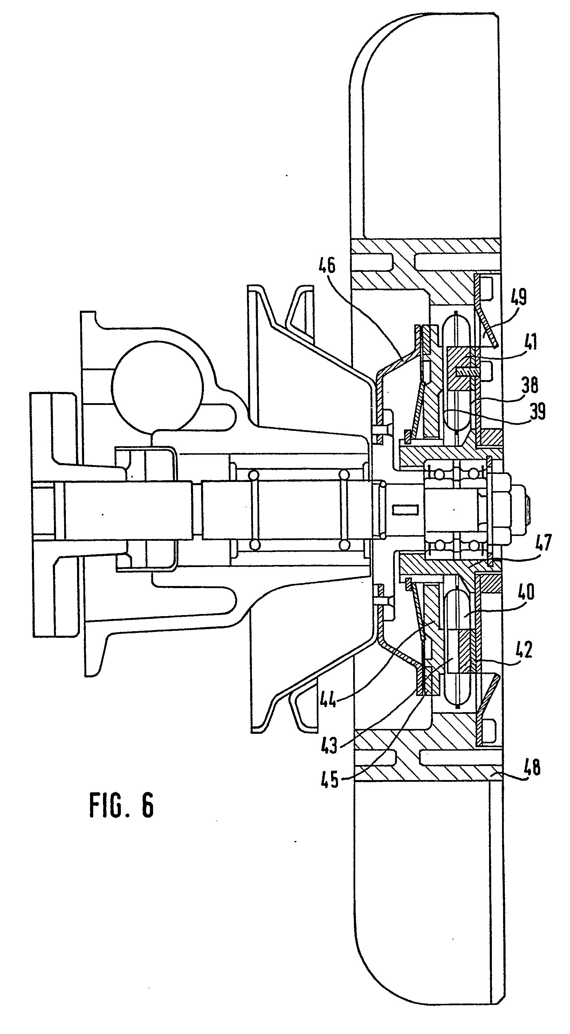

Während in Fig. 1 der Behälter des Thermostaten durch einen mehrere Wellen umfassenden Faltenbalg 23 gebildet ist, ist bei der in Fig. 6 gezeigten Ausbildungsform des erfindungsgemäßen Ventilators ein Metallbalg verwendet, der als Faltenbalg mit einer einzigen Welle bezeichnet werden kann.

Der in Fig. 6 gezeigte Metallbalg ist aus zwei kreisringförmigen Schalen 38 und 39 gebildet, deren Ränder durch Löten oder Schweißen gasdicht verbunden sind, um einen konzentrisch um die innere Nabe 18 des Ventilators umlaufenden, ringförmigen Hohlraum 40 zu schaffen. Als gut wärmeleitendes Element ist hier ein Ring 41 vorgesehen, der mit der Frontplatte 42 gut wärmeleitend, vorzugsweise ebenfalls durch Löten oder Schweißen, verbunden ist. Am Umfang des Ringes 41 sind Nuten 43 eingelassen, um eine freie Zirkulation des Füllmediums im Hohlraum 40 zu ermöglichen. Ebenfalls mit der Frontplatte 42 ist auch die feste Wandung der Schale 38 verbunden.

Sobald das Füllmedium im Hohlraum 40 des Thermostaten einen ausreichenden Druck aufweist, wird eine an der nachgiebigen Wandung der Schale 39 anliegende Druckplatte 44, deren von der Schale abliegende Oberfläche mit einem Reibbelag 45 versehen ist, an eine auf der Motorwelle 2 sitzende Gegenscheibe 46 gepreßt und damit der Ventilator im Kraftschluß angekoppelt. Die Druckplatte 44 sitzt axial verschieblich auf der inneren Ventilatornabe 47 und ist mit dieser mittels Zähnen und Nuten formschlüssig verbunden. Die ebenfalls auf der inneren Ventilatornabe 47 befestigte Frontplatte 42, die mit der äußeren, die Ventilatorflügel tragende Nabe 48, verbunden ist, bewirkt bei erfolgter Kupplung zwischen der Druckplatte 44 und der Gegenscheibe 46 die Rotation der Ventilatorflügel.

Zur besseren Wärmeübertragung aus dem Kühlluftstrom an das im Thermostaten befindliche Füllmedium, sind in die Frontplatte 42 am Umfang verteilt Ausbuchtungen oder Fenster 49 eingebracht, über die die Kühlluft streichen kann, um ihre Wärme an den Thermostaten zu übertragen. Die übrigen Konstruktionselemente entsprechen denen des Ausbildungsbeispieles 1 und brauchen hier nicht nochmals eigens aufgeführt zu werden. Ihre Bezugsziffern sind daher im Text mit diesen übereinstimmend gewählt worden.

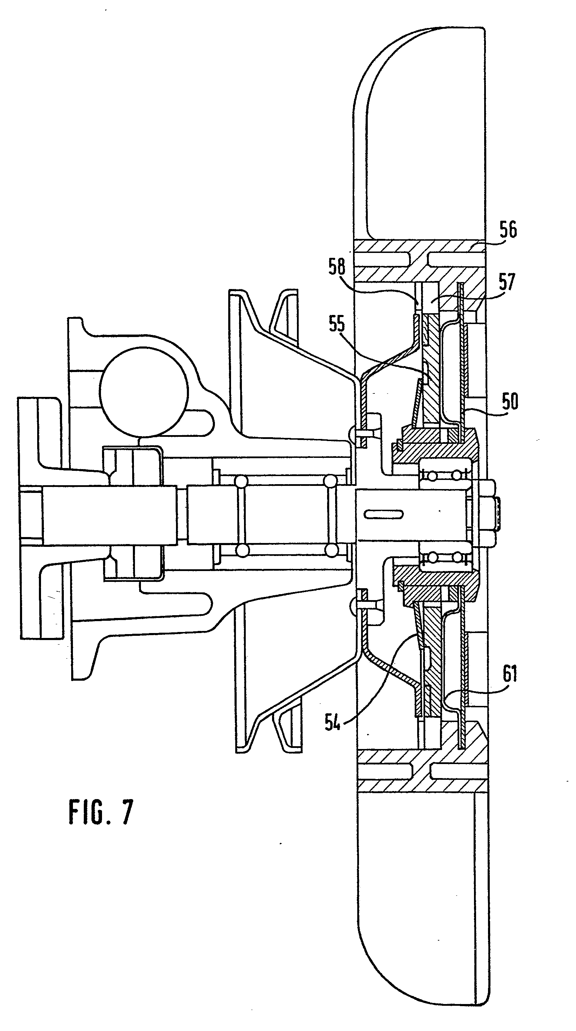

Bei dem in Fig. 7 gezeigten Ausführungsbeispiel ist der Thermostat durch einen als eine ringförmige Schale 61 ausgebildeten Balg gebildet, deren Ränder gasdicht unmittelbar mit der Frontplatte 50 verlötet oder verschweißt sind.

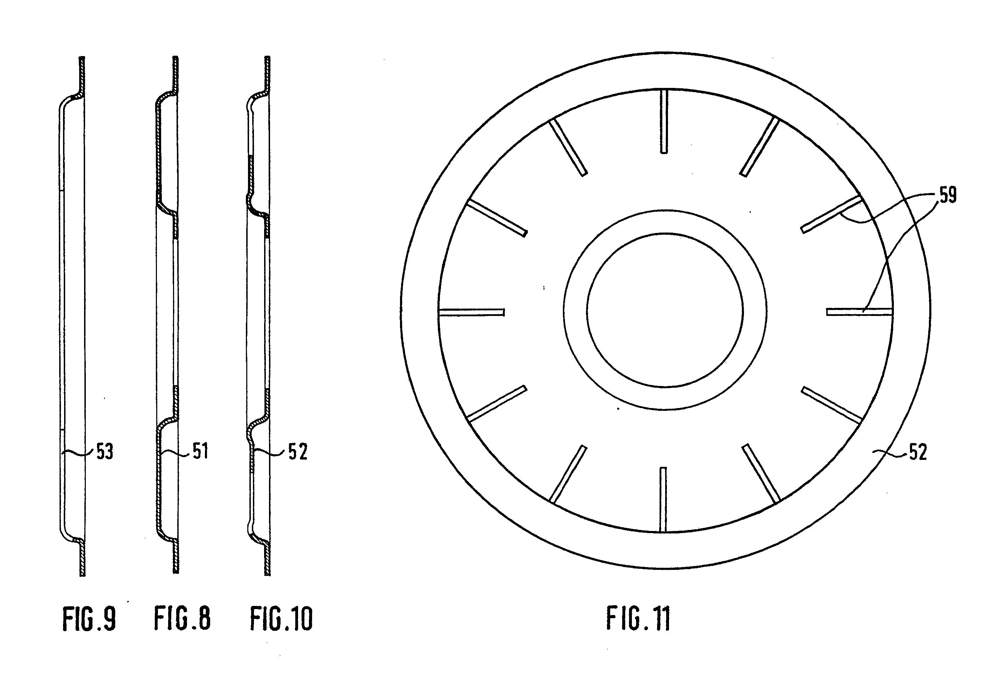

Zur Erzielung einer ausreichenden Verschiebung der nachgiebigen Schalenwand bei Erhöhung des Druckes des Füllmediums, umfaßt die Schale 61 im Ausführungsbeispiel eine sehr dünne gasdichte Metallfolie (Fig. 8) Diese Metallfolie 51 ist schalenförmig ausgebildet. Sie ist jedoch äußerst empfindlich gegen Druckveränderung und muß daher gegen Überbeanspruchung durch Stütz- bzw. Schutzschalen bewehrt sein.

In Fig. 10 ist eine hierfür geeignete biegesteife ringförmige Stützschale 52 gezeigt, deren Form im wesentlichen der der Schale 51 entspricht. Ihre Fläche ist jedoch mit Schlitzen 59 versehen, um eine gute Zirkulation des Füllmediums im Schalen-bzw. Balginnenraum zu ermöglichen. Die Stützschale 52 ist ebenfalls aus Metall gefertigt und erfüllt gleichzeitig die Aufgabe einer guten Wärmeübertragung von der Frontplatte 50 an das Füllmedium. Ferner dient sie als Abstandshalter zwischen der Frontplatte 50 und der Schale 51, um einen wählbaren Mindestabstand zwischen der Ringfläche der Schale 51 und der Frontplatte 50 zu gewährleisten. Die Schlitze 59 der Schale 52 verlaufen in radialer Richtung und haben die weitere Aufgabe, die Steifigkeit der Stützschale 52 zu verringern. Anstelle der Schlitze 59 können jedoch auch beliebig geformte Durchbrüche in beliebiger Anzahl und Anordnung gewählt sein.

Während die Stützschale 52 die Aufgabe hat, die aus mindestens einer sehr dünnen Folie gebildete Schale 51 gegen eine Überbeanspruchung von außen zu sichern, dient eine weitere ringförmige Schale 53, welche als Schutzschale auf der äußeren Oberfläche der Schale 51 angeordnet ist, dazu, eine Überbeanspruchung der Schale 51 durch erhöhten Innendruck zu verhindern. Die Schale 53 ist ebenfalls mit radial verlaufenden Schlitzen 60 oder anderen beliebig angeordneten Durchbrechungen versehen, doch kann sie im Gegensatz zu der Stützschale 52 auch aus einem plastischen Material bestehen, so daß die bei Druckerhöhung des Füllmediums für die Kupplung erforderliche Hubbewegung der Schale 51 nicht behindert wird. Demgegenüber hat die biegesteife Stützschale 52 der Feder 54 Widerstand entgegenzusetzen.

Die beschriebenen, im wesentlichen untereinander formgleichen Schalen 53, 51 und 52 werden in der genannten Reihenfolge übereinander geschoben und an ihren Rändern mit der Frontplatte 50 vereinigt. Dabei werden mindestens die aus Metall gebildeten Schalen 51 und 52 längs ihrer Randzonen mit der Frontplatte 50 gasdicht verlötet oder verschweißt.

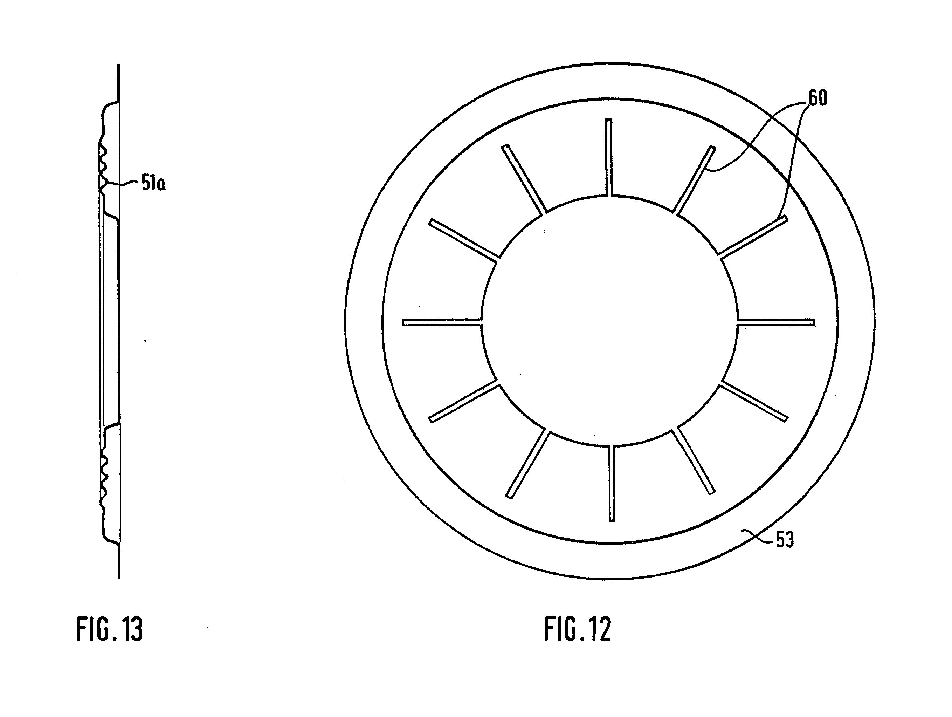

Eine besonders große Elastizität und gute Durchbiegungsfähigkeit bei Druckänderung im Inneren des Balgs erhält man, wenn man die Folien für die elastischen Schalen in ihrer Mittelzone entsprechend der im Querschnitt in Fig. 13 gezeigten Ausbildung 51a mit konzentrisch verlaufenden Rillen versieht.

Es soll darauf hingewiesen werden, daß anstelle der Schutzschale 53 auch eine Mehrzahl dünner Schalen schichtartig miteinander vereinigt sein kann. Diese Ausbildungsform ist jedoch nicht zeichnerisch dargestellt. Bei dieser Ausbildung können eine oder mehrere Schalen auch aus Kunststoff bestehen, sofern dafür gesorgt ist, daß mindestens eine Schale 51 eine gasdichte Verbindung mit der Frontplatte gewährleistet, was durch Wahl einer metallischen Folie erreicht wird.

Die Schale 53 kann, da sie keine Dichtungsfunktion ausübt, zur Erzielung einer guten Elastizität ebenfalls aus Kunststoff bestehen. Lediglich die Platte 52, die neben ihrer Stützfunktion auch noch die Aufgabe einer guten Wärmeübertragung von der Frontplatte zum Füllmedium zu erfüllen hat, sollte aus einem metallischen Werkstoff gefertigt sein. Für die Druckübertragung ist auch bei der in Fig. 7 gezeigten Ausbildungsform eine Druckplatte 55 vorgesehen, die mit dem äußeren Nabenteil 56 des Ventilators mittels Zähnen 57 und Nuten 58 formschlüssig verbunden ist.

Die Wirkungsweise des selbsttätig schaltbaren Ventilators ist folgende :

Wenn der beschriebene Ventilator hinter einem Fahrzeugkühler angeordnet und über die Keilriemenscheibe 7, 8 vom Motor angetrieben wird, ist bei Beginn des Betriebes der Ventilator vorerst nicht mit der Welle 11 gekuppelt und steht fast still. Allmählich wird die durch den Kühler strömende, angewärmte Luft auf den Thermostaten einwirken ; eine solche Luftströmung entsteht schon bei geringer Fahrgeschwindigkeit, ja schon durch die Schleppdrehzahl des Ventilators. Bei steigender Temperatur der Kühlluftströmung wird auch der Thermostat auf höhere Temperatur gebracht und bei Erreichung der zugehörigen Temperatur beginnt das Füllmedium im Thermostaten zu sieden, wobei sich bei stetiger Wärmezufuhr im Thermostaten ein Gasdruck aufbaut, der den nachgiebigen Teil des Faltenbalges nach links (in Fig. 1) drückt, wodurch unter Überwindung der Kraft der Feder 30 die Grundplatte 24 des Thermostaten an die vom Motor angetriebene Kupplungsgegenscheibe 9 drückt. Infolge des einsetzenden Kraftschlusses wird der Ventilator und der mit diesem verbundene Thermostat in entsprechende Drehung versetzt. Die im Thermostaten befindliche Flüssigkeit wird ebenfalls in Drehung versetzt und die dadurch entstehende Fliehkraft drückt mit ihrer Axialkomponente auf die nachgiebige Grundplatte 24 des Thermostaten und übt damit einen zusätzlichen Druck auf die Kupplungsgegenscheibe 9 aus, was zusammen mit dem Gasdruck die Übertragung des Drehmomentes bewirkt.

Solange die Kühllufttemperatur über dem Normalwert liegt, wird dieser Zustand erhalten bleiben und es tritt eine intensive Kühlung durch den Ventilator ein. Sinkt nun die Kühllufttemperatur auf einen Wert ab, der in der Nähe der Siedetemperatur des Füllmediums liegt, so verschwindet auch der im Thermostaten wirkende Gasdruck und es bleibt nur der von der Flüssigkeit erzeugte Fliehkraftdruckanteil übrig, der aber allein nicht ausreicht, das Ventilator-Drehmoment in allen Betriebsbereichen zu übertragen. Reißt in irgendeinem Betriebszustand die Kupplung nur einen Moment ab, so sinkt sofort die Ventilatordrehzahl und der von der Fliehkraft erzeugte Druckanteil bricht rasch zusammen, da er dem Quadrat der Umdrehungsgeschwindigkeit direkt proportional ist. Hierzu kommt noch, daß im Moment, in dem die Kupplung zu schlüpfen beginnt, an dem Reibbelag 31 der dynamische Reibwert maßgeblich wird, welcher aber wesentlich kleiner ist als der statische Reibwert (Haftreibung). Damit ist ein rasches, praktisch schlupfloses Abschalten der Kupplung gewährleistet.

Die im Zusammenhang mit Fig. 1 beschriebene Arbeitsweise des Ventilators entspricht im wesentlichen auch der der in den Fig. 6 und 7 gezeigten Ausbildungsformen, so daß auf diese nicht mehr im einzelnen eingegangen werden muß.

## Patentansprüche

1. Selbsttätig schaltbarer Ventilator für Kühlsysteme von Verbrennungsmotoren mit einem von der Kühlluft überstrichenen ringförmigen Thermostaten, der als gasdichter Behälter in Form eines Balges ausgebildet ist und eine starre, dem Kühlluftstrom zugewandte Frontplatte (22, 42, 50) und eine axial nachgiebige Wandung (24, 39, 51) aufweist und ein Medium enthält, das bei einer vorgegebenen Temperaturerhöhung auf die nachgiebige Wandung (24, 39, 51) im Sinne einer Ankupplung des Ventilators (18, 19, 20, 21) an eine Antriebswelle (2) des Verbrennungsmotors einwirkt, wobei die Frontplatte (22, 42, 50) und die axial nachgiebige Wandung aus Metall bestehen und die Frontplatte (22, 42, 50) mit einem Nabenteil (18) des Ventilators verbunden ist dadurch gekennzeichnet, daß die gasdichte Verbindung zwischen Frontplatte (22, 42, 50) und axial nachgiebiger Wandung für die unmittelbare Übertragung eines Drehmomentes drehfest ausgebildet ist, daß die axial nachgiebige Wandung (24, 39, 51) bei Entstehung eines entsprechenden Innendruckes des Füllmediums im Thermostaten (22, 23, 24) unmittelbar über eine Reibfläche auf ein Kupplungsteil (9) der Antriebswelle (2) des Antriebsmotors einwirkt und durch Reibungsschluß das Drehmoment der Antriebswelle (2) an den Ventilator (18, 19, 20, 21) überträgt, und daß mindestens ein wärmeleitendes Element (34, 41, 52) vorgesehen ist, das mit der Frontplatte (22, 42, 50) wärmeleitend verbunden ist, in den Hohlraum des Behälters hineinreicht und einen wählbaren Mindestabstand zwischen der Frontplatte und der nachgiebigen Wandung (24, 39, 51) des Behälters bestimmt.

2. Ventilator nach Anspruch 1, dadurch gekennzeichnet, daß der Balg mit der nachgiebigen Wandung (24, 39, 51) einstückig ausgebildet ist.

3. Ventilator nach Anspruch 1 oder 2, dadurch gekennzeichnet, daß der Balg mit der Frontplatte und mit der nachgiebigen Wandung verlötet oder verschweißt ist.

4. Ventilator nach Anspruch 1, dadurch gekennzeichnet, daß der Balg und die Frontplatte mittels einer Klemmverbindung miteinander und mit dem Nabenteil (18) des Ventilators verbunden sind, wobei die Klemmverbindung als Klemmelemente mindestens zwei durch einen Federring (27) in Abstand gehaltene Ringe (26, 28) umfaßt, die mit Hilfe von Halteelementen (25, 29) auf dem Nabenteil (18) fixiert sind.

5. Ventilator nach einem der vorhergehenden Ansprüche, dadurch gekennzeichnet, daß der Balg aus einer oder mehreren Schalen (51, 52, 53) gebildet ist, von denen mindestens eine eine gasdichte Struktur (51) aufweist und daß die gasdichte(n) Schale(n) mit weiteren dazu schichtartig angeordneten Schalen (52, 53) kombiniert ist (sind), die ihrerseits mit Schlitzen (59, 60) oder Durchbrüchen versehen sind.

6. Ventilator nach Anspruch 5, dadurch gekennzeichnet, daß mindestens eine der Schalen mit Schlitzen oder Durchbrüchen als biegesteife Stützschale (52) für die gasdichte Schale ausgebildet ist und längs deren Oberfläche im Innenraum des Balges angeordnet ist.

7. Ventilator nach einem der vorhergehenden Ansprüche, dadurch gekennzeichnet, daß mindestens eine der Schalen mit Schlitzen oder Durchbrüchen als elastische Schutzschale (53) für die gasdichte(n) Schale(n), gegen im Innenraum des Balges auf diese wirkende Überdrücke, längs der Außenfläche der gasdichten Schale(n) angeordnet ist.

8. Ventilator nach einem der vorhergehenden Ansprüche, dadurch gekennzeichnet, daß der Balg als Faltenbalg (23 a, b) mit einer oder mehreren Wellen ausgebildet ist.

9. Ventilator nach einem der vorhergehenden Ansprüche, dadurch gekennzeichnet, daß zwei gasdichte ringförmige Schalen längs ihrer Ränder zu einem gasdichten Hohlraum vereinigt sind, der mit der Frontplatte wärmeleitend verbunden ist, oder daß eine Schale längs ihres Randes unmittelbar mit der Frontplatte wärmeleitend verbunden ist.

10. Ventilator nach einem der vorhergehenden Ansprüche, dadurch gekennzeichnet, daß die Frontplatte (22, 42, 50) auf ihrer Außenfläche verteilt eine Mehrzahl von Vorsprüngen (36, 49) aufweist, um die Wärmeübertragung zwischen Kühlluftstrom und Thermostat zu erhöhen.

11. Ventilator nach einem der vorhergehenden Ansprüche, dadurch gekennzeichnet, daß der Thermostat die einzige mechanische Verbindung zwischen einem äußeren die Flügel des Ventilators tragenden Nabenteil (19) und einem inneren Nabenteil (18), der die zur freien Drehung des Ventilators auf der Antriebswelle des Verbrennungsmotors dienenden Lager (12, 13) trägt, bildet.

12. Ventilator nach einem der Ansprüche 1-6 oder 8-11, dadurch gekennzeichnet, daß die den Balg bildenden gasdichten Schalen (51) aus einer Mehrzahl von elastischen Schalenschichten gebildet sind, von denen mindestens eine gasdicht ist, wobei die Gesamtheit der Schalenschichten eine solche ausreichende Stärke aufweist, daß die Schutzschale entfallen kann.

**Claims**

1. Automatically controlled fan for cooling systems of internal-combustion engines with an annular thermostat swept by the cooling air configured as a gastight reservoir in the form of a bellows, comprising a front plate (22, 42, 50) facing the cooling-air flow and an axially resilient wall (24, 39, 51) and containing some fluid which, in response to a predetermined temperature rise, acts upon the resilient wall (24, 39, 51) with the effect of coupling the fan (18, 19, 20, 21) to a drive shaft (2) of the internal-combustion engine, the front plate (22, 42, 50) and the axially resilient wall being made of metal, and the front plate (22, 42, 50) being connected to a hub section (18) of the fan, characterized in that the gas-tight connection between the front plate (22, 42, 50) and the axially resilient wall is torsionally rigid for direct torque transmission, that the axially resilient wall (24, 39, 51) directly acts upon a coupling member (9) of the drive shaft (2) of the internal-combustion engine through a friction surface when a corresponding internal pressure of the fluid filling in the thermostat (22, 23, 24) is produced, thereby transmitting the torque of the drive shaft (2) to the fan (18, 19, 20, 21) by frictional engagement, and that at least one heat-conducting element (34, 41, 52) is provided to ensure heat-conducting connection to the front plate (22, 42, 50), penetrating into the cavity of the reservoir and defining a selectable minimum clearance between the front plate and the resilient wall (24, 39, 51) of the reservoir.

2. Fan according to claim 1, characterized in that the bellows is formed integrally with the resilient wall (24, 39, 51).

3. Fan according any to one of claims 1 or 2, characterized in that the bellows is soldered or welded to the front plate and to the resilient wall.

4. Fan according to claim 1, characterized in that the bellows and the front plate are connected to each other and to the hub section (18) of the fan by clamping connection, said clamping connection comprising at least two rings (26, 28) kept in spaced-apart relationship by a spring ring (27), said rings being attached to the hub section (18) by means of retaining elements (25, 29).

5. Fan according to any one of the preceding claims, characterized in that the bellows is formed of one or several shells (51, 51, 53), at least one of which having a gas-tight structure (51), and that the gas-tight shell(s) is (are) combined with further shells (52, 53) arranged in layers and provided with slots (59, 60) or openings.

6. Fan according to claim 5, characterized in that at least one of the shells provided with slots or openings is formed as a torsionally rigid supporting shell (52) for the gas-tight shell and is arranged along its surface inside the bellows.

7. Fan according to any one of the preceding claims, characterized in that at least one of the shells provided with slots or openings is arranged along the outer surface of the gas-tight shell(s) as a resilient protective shell (53) for the gas-tight shell(s) against any overpressure acting against it (them) inside the bellows.

8. Fan according to any one of the preceding claims, characterized in that the bellows is formed as a corrugated bellows having one or several corrugations.

9. Fan according to any one of the preceding claims, characterized in that two gas-tight annular shells are connected along their rims to form a gas-tight cavity having heat-conducting connection to the front plate, or that one shell has direct heat-conducting connection to the front plate along its rim.

10. Fan according to any one of the preceding claims, characterized in that the front plate (22, 42, 50) has a plurality of projections (36, 49) distributed over its outer surface to increase heat conduction between the cooling-air flow and the thermostat.

11. Fan according to any one of the preceding claims, characterized in that the thermostat constitutes the sole mechanical connection between an outer hub section (19) supporting the fan blades and an inner hub section (18) containing the bearings (12, 13) provided for free rotary movement of the fan on the drive shaft of the internal-combustion engine.

12. Fan according to any one of claims 1-6 or 8-11, characterized in that the gas-tight shells (51) constituting the bellows are formed of a plurality of resilient shell layers, at least one of which being gas-tight, the totality of the shell layers having such sufficient strength to allow omitting the protective shell.

## Revendications

1. Ventilateur pouvant être commandé automatiquement pour systèmes de refroidissement de moteurs à combustion interne, muni d'un thermostat annulaire balayé par l'air de refroidissement, qui est conçu sous forme de récipient étanche aux gaz, en forme de soufflet et présente une plaque frontale rigide (22, 42, 50) tournée vers le courant d'air de refroidissement et une paroi souple élastiquement en direction axiale (24, 39, 51) et contient un fluide qui, lors d'une augmentation prédéterminée de température, agit sur la paroi souple (24, 39, 51) dans le sens d'un accouplement du ventilateur (18, 19, 20, 21) à un arbre d'entraînement (2) du moteur à combustion interne, la plaque frontale (22, 42, 50) et la paroi souple axialement étant formées de métal et la plaque frontale (22, 42, 50) étant reliée à un élément de moyeu (18) du ventilateur, caractérisé en ce que la liaison étanche aux gaz entre plaque frontale (22, 42, 50) et paroi souple axialement est conçue sous forme solidaire en rotation pour la transmission directe d'un couple, en ce que la paroi souple axialement (24, 39, 51) lorsqu'il apparaît une pression intérieure correspondante du milieu de remplissage dans le thermostat (22, 23, 24) agit directement, par l'intermédiaire d'une surface de frottement, sur un élément d'accouplement (9) de l'arbre d'entraînement (2) du moteur d'entraînement et transmet par friction le couple de l'arbre d'entraînement (2) au ventilateur (18, 19, 20, 21), et en ce qu'il est prévu au moins un élément conducteur de la chaleur (34, 41, 52) qui est relié de façon conductrice de la chaleur à la plaque frontale (22, 42, 50), pénètre dans la cavité du récipient et détermine une distance minimale pouvant être choisie entre la plaque frontale et la paroi souple (24, 39, 51) du récipient.

2. Ventilateur selon la revendication 1, caractérisé en ce que le soufflet est constitué d'une seule pièce avec la paroi souple (24, 39, 51).

3. Ventilateur selon l'une des revendications 1 et 2, caractérisé en ce que le soufflet est brasé ou soudé à la plaque frontale et à la paroi souple.

4. Ventilateur selon la revendication 1, caractérisé en ce que le soufflet et la plaque frontale sont reliés entre eux et à l'élément de moyeu (18) du ventilateur au moyen d'une liaison à serrage, la liaison à serrage comprenant comme éléments de serrage au moins deux anneaux (26, 28) maintenus espacés par un anneau de ressort (27) et qui sont fixés sur l'élément de moyeu (18) à l'aide d'éléments de retenue (25, 29).

5. Ventilateur selon l'une des revendications précédentes, caractérisé en ce que le soufflet est formé d'une ou plusieurs cuvettes (51, 52, 53) dont au moins une présente une structure étanche aux gaz (51), et en ce que la ou les cuvettes étanches aux gaz sont combinées à d'autres cuvettes (52, 53) disposées à la façon de couches par rapport à celle-ci et qui, de leur côté, sont munies de fentes (59, 60) ou de perforations.

6. Ventilateur selon la revendication 5, caractérisé en ce qu'au moins une des cuvettes munies de fentes ou de perforations est conçue sous forme de cuvette de soutien (52) rigide en flexion pour la cuvette étanche aux gaz et est disposée le long de la surface de celle-ci dans la cavité intérieure du soufflet.

7. Ventilateur selon l'une des revendications précédentes, caractérisé en ce qu'au moins une des cuvettes munies de fentes ou perforations est disposée, en tant que cuvette élastique de protection (53) de la ou des cuvettes étanches aux gaz contre des surpressions agissant sur celles-ci dans la cavité intérieure du soufflet, le long de la surface extérieure de la ou des cuvettes étanches aux gaz.

8. Ventilateur selon l'une des revendications précédentes, caractérisé en ce que le soufflet est conçu sous forme de soufflet à plis (23 a, b) muni d'une ou plusieurs ondulations.

9. Ventilateur selon l'une des revendications précédentes, caractérisé en ce que deux cuvettes annulaires étanches aux gaz sont réunies, le long de leurs bords, en une cavité étanche aux gaz qui est reliée de façon conductrice de la chaleur à la plaque frontale ou en ce qu'une cuvette est directement reliée de façon conductrice de la chaleur, le long de son bord, à la plaque frontale.

10. Ventilateur selon l'une des revendications précédentes, caractérisé en ce que la plaque frontale (22, 42, 50) présente plusieurs saillies (36, 49) réparties à sa surface extérieure pour augmenter le transfert de chaleur entre le courant d'air de refroidissement et le thermostat.

11. Ventilateur selon l'une des revendications précédentes, caractérisé en ce que le thermostat forme la seule liaison mécanique entre un élément extérieur de moyeu (19) et un élément intérieur de moyeu (18) qui porte les paliers (12, 13) servant à la rotation libre du ventilateur sur l'arbre d'entraînement du moteur à combustion interne.

12. Ventilateur selon l'une des revendications 1 à 6 ou 8 à 11, caractérisé en ce que les cuvettes étanches aux gaz formant le soufflet sont formées de plusieurs couches élastiques de cuvette dont au moins une est étanche, l'ensemble des couches de cuvette présentant une épaisseur suffisante pour que la cuvette de protection puisse être supprimée.

FIG. 1

24

23a 33

23b 32

FIG.2          FIG.3

FIG.4          FIG.5

27

0 052 859

FIG. 6

3

FIG. 7

FIG.9  FIG.8  FIG.10

FIG.11

53

51

52

59

52

0 052 859

FIG.12

FIG. 13